# EUROPEAN PATENT APPLICATION

(11) **EP 4 813 724 A1**
(43) Date of publication of application: **30.09.2026**
(21) Application number: 26164116.1
(22) Date of filing: 11.03.2026
(51) Int. Cl.: B60L 7/18, B60L 7/20, B60L 7/22, B60L 50/61, B60L 58/15, B60L 58/24, B60W 20/30, B60W 20/40, B60W 30/18, B60W 50/00

(54) **PREDICTIVE DYNAMIC SPEED CONTROL FOR AN ELECTRIFIED VEHICLE TRAVELING ALONG A HILLED ROUTE**

(30) Priority: 24.03.2025 US 202563776462 P; 10.03.2026 US 202619561747
(71) Applicant: Cummins Inc., Columbus, IN 47201 (US)
(72) Inventor: LE, Dat, Columbus, 47201 (US); FOLLEN, Kenneth, Greenwood, 46143 (US); BELLINGER, Steven, Columbus, 47201 (US)
(74) Representative: Cleveland Scott York

(57) **Abstract**

A vehicle system includes a powertrain including a prime mover system including an electric power system, the electric power system including an energy storage system (ESS), power electronics operatively coupled with the ESS, and an electric machine operatively coupled with the power electronics. One or more ground engaging wheels operatively coupled with the prime mover system. An electronic control system in operative communication with the prime mover system, the electronic control system being configured to: determine, prior to reaching a downhill route segment, a pre-downhill target vehicle speed, a pre-downhill electric power system target state, and a downhill vehicle speed target, control the vehicle system to achieve the pre-downhill target vehicle speed and the pre-downhill electric power system target state prior to or upon reaching the downhill route segment, and operate the electric power system to perform electric braking during the downhill route segment to control vehicle speed according to the downhill vehicle speed target.

## Description

### TECHNICAL FIELD

The present disclosure relates to vehicle control systems and more particularly but not exclusively to predictive dynamic speed control for an electrified vehicle traveling along a hilled route and related apparatuses, processes, systems, and techniques.

### BACKGROUND

Present approaches to vehicle speed control suffer from a number of disadvantages and shortcomings including those relating to control of vehicles traveling along hilled routes including, for example, those respecting efficiency and over-use of foundation brakes creating premature wear, over-heating, and other issues. There remains a significant need for the unique apparatuses, methods and systems disclosed herein.

### DISCLOSURE OF ILLUSTRATIVE EMBODIMENTS

For the purposes of clearly, concisely and exactly describing illustrative embodiments of the present disclosure, the manner and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created, and that the invention includes and protects such alterations, modifications, and further applications of the exemplary embodiments as would occur to one skilled in the art.

### SUMMARY OF THE DISCLOSURE

One embodiment is a system comprising unique predictive dynamic speed control for an electrified vehicle traveling along a hilled route. One embodiment is a process comprising unique predictive dynamic speed control for an electrified vehicle traveling along a hilled route. One embodiment is an apparatus comprising unique predictive dynamic speed control for an electrified vehicle traveling along a hilled route. Further embodiments, forms, objects, features, advantages, aspects, and benefits shall become apparent from the following description and drawings.

### BRIEF DESCRIPTION OF THE DRAWINGS

Fig. 1 is a schematic illustration of a vehicle with a control system for controlling the speed of the vehicle.
Figs. 2A-2D are schematic diagrams illustrating certain aspects of vehicle operation over a vehicle route.
Figs. 3A-3C are schematic diagrams illustrating certain aspects of vehicle operation over a vehicle route.
Fig. 4 is a flow diagram illustration of an example procedure for controlling a vehicle.
Fig. 5 is a diagram illustration depicting certain aspects of a control architecture for controlling various operational aspects of a vehicle.
Fig. 6 is a schematic diagram illustrating certain aspects of vehicle operation over a vehicle route.
Fig. 7 is a schematic diagram illustrating certain aspects of vehicle operation over a vehicle route.
Figs. 8A-8C are schematic diagrams depicting certain aspects of battery electric powertrain architectures.
Figs. 9A-9C are schematic diagrams depicting certain aspects of series hybrid powertrain architectures.
Figs. 10A-10C are schematic diagrams depicting certain aspects of fuel cell powertrain architectures.
Figs. 11A-11F are schematic diagrams depicting certain aspects of parallel hybrid powertrain architectures.
Figs. 12A-12B are schematic diagrams depicting certain aspects of series-parallel hybrid powertrain architectures.
Fig. 13 is a schematic diagram depicting certain aspects of a through-road parallel powertrain architecture.

### DETAILED DESCRIPTION OF EXAMPLE EMBODIMENTS

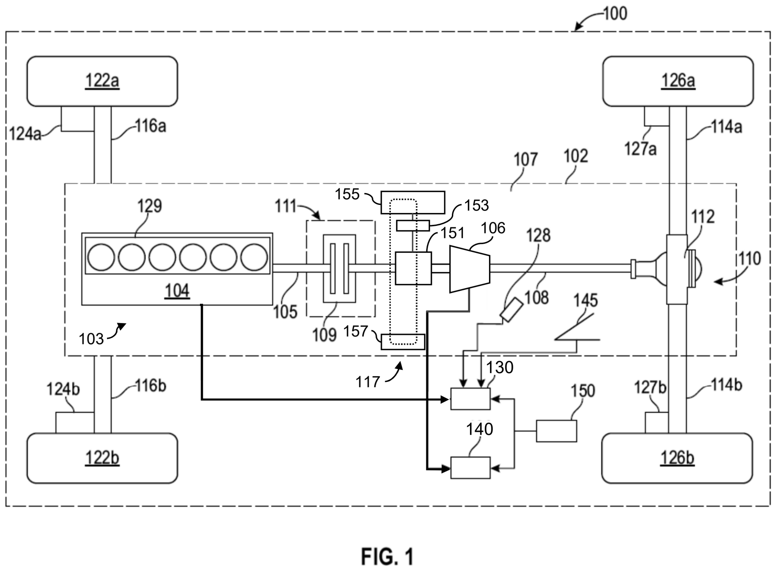

With reference to Fig. 1, there is illustrated a schematic view of an example vehicle 100 including a powertrain 102 incorporated within vehicle 100. In the illustrated embodiment, vehicle 100 and powertrain 102 are configured and provided in an electrified form wherein powertrain 102 includes a prime mover system 103 including an internal combustion engine104 and an electric power system 117 including an electric machine 151 (*e.g.,* one or more traction motor(s) (TM)), power electronics 153 (e.g., an inverter and/or or other types of power converters, busses, and conditioners), and an energy storage system (ESS) 155 which are operatively coupled with one another. In the illustrated example, ESS 155 comprises a battery pack. In other embodiments, ESS 155 may additionally or alternatively comprise one or more super capacitors, one or more ultra capacitors, one or more fuel cells, or one or more other energy storage components as will occur to one of skill in the art with the benefit and insight of the present disclosure.

In the illustrated example, vehicle 100, powertrain 102, and prime mover system 103 are configured and provided in the form of a parallel hybrid system in which an internal combustion engine 104 and an electric machine 151 are structured to selectably output torque to propel the vehicle 100. Other embodiments contemplate other types of electrified architectures including, for example, battery electric powertrain architectures, series hybrid electric powertrain architectures, fuel cell powertrain architectures, other types of parallel hybrid powertrain architectures, series-parallel electric powertrain architectures, thru-road parallel powertrain architectures, and other electrified powertrain architectures.

The powertrain 102 further includes a transmission 106 connected to the prime mover 104 for adapting the output torque of the prime mover system 103 and transmitting the output torque to a driveline 107 including drive shaft 108. In the illustrated embodiment, the transmission 106 may be disengageably connected to an engine crankshaft 105 via a clutch 109.

In other embodiments, the transmission 106 may be disengageably connected to an engine crankshaft 105 and the engagement and disengagement may be by operation of a master clutch provided at the front of the transmission, by operation of the transmission to place a gear in a neutral condition, or by other clutch and/or gearing arrangements. Various embodiments contemplate that transmission 106 may be an automatic transmission, an automated manual transmission, a manual transmission or any other suitable transmission with a disconnect device 111 that is operable to selectively engage and disengage engine 104 from driveline 107. It shall be appreciated that some embodiments, such as battery electric vehicle (BEV) powertrains or fuel cell powertrains, may omit transmission 106. It shall be further appreciated that a clutch according to the present disclosure may comprise a master clutch, a clutch within transmission, a clutch within e-axle, a clutch within driveline, or a clutch at other positions within the powertrain system as will occur to one of skill in the art with the benefit and insight of the present disclosure.

In the rear-wheel-drive configuration illustrated for vehicle 100, the driveline 107 of powertrain 102 includes a final drive 110 having a rear differential 112 connecting the drive shaft 108 to rear axles 114a, 114b. It is contemplated that the components of powertrain 102 may be positioned in different locations throughout the vehicle 100. In one non-limiting example of a vehicle 100 having a front wheel drive configuration, transmission 106 may be a transaxle and final drive 110 may reside at the front of vehicle 100, connecting front axles 116a and 116b to engine 104 via the transaxle. It is also contemplated that in some embodiments the vehicle 100 is in an all-wheel drive configuration.

In the illustrated embodiment, vehicle 100 includes two front wheels 122a, 122b mounted to front axles 116a, 116b, respectively. Vehicle 100 further includes two rear wheels 126a, 126b mounted to rear axles 114a, 114b, respectively. It is contemplated that vehicle 100 may have more or fewer wheels than illustrated in Fig. 1. Vehicle 100 also includes foundation brakes 124a, 124b, 127a, 127b (sometimes referred to as service brakes) to mechanically slow one or more wheels 122a, 122b, 126a, 126b, respectively, upon application of a brake pedal 128 and/or automatically in response to one or more vehicle speed control outputs. Vehicle 100 also includes an engine braking system 129 operable to retard prime mover system 103 and slow vehicle 100 without friction braking such as by compression release braking, exhaust braking, etc. Vehicle 100 may also include various components not shown, such as a fuel system including a fuel tank, a front differential, a suspension, an engine intake system and an exhaust system, which may include an exhaust aftertreatment system, just to name a few examples.

Vehicle 100 includes an electronic or engine control unit (ECU) 130, sometimes referred to as an electronic or engine control module (ECM), or the like, which is directed to regulating and controlling the operation of engine 104. An accelerator pedal 145 and/or other throttle control mechanism can be connected to ECU 130 to initiate fueling by an operator. A transmission control unit (TCU) 140 is illustrated in vehicle 100, which is directed to the regulation and control of transmission 106 operation. ECU 130 and TCU 140 are each in operative communication with a plurality of vehicle sensors (not shown) in vehicle 100 for receiving and transmitting operating conditions of vehicle 100, such as temperature conditions, pressure conditions, speed conditions, fuel conditions, flow conditions to and from the engine, terrain conditions, weather conditions, global positioning system (GPS) data, and vehicle mass, for example. It is contemplated that ECU 130 and TCU 140 may be integrated within the engine 104 and transmission 106, respectively.

Vehicle 100 further includes a vehicle speed management (VSM) controller or control unit 150, which may be directed to the control of the operations described herein and/or directed toward an intermediary control for the regulation and control of the powertrain 102 in vehicle 100. The VSM control unit 150 is in operative communication with the ECU 130 and TCU 140. In certain embodiments, a portion or all of the of the VSM control unit 150 may be integrated within the ECU 130 or the TCU 140 or other vehicle control unit. In still other embodiments, at least the VSM control unit 150 communicates with ECU 130 and/or TCU 140 over a datalink provided by a wired or wireless connection so that outputs of VSM control unit 150 that are determined independently of ECU 130 and/or TCU 140 can be provided to the ECU 130 and/or TCU 140.

VSM control unit 150 may further be in operative communication with one or more of the plurality of vehicle sensors in vehicle 100 for receiving and transmitting conditions of vehicle 100, such as temperature and pressure conditions, route conditions, road curvatures, terrain conditions, speed conditions, and weather conditions, for example. It is contemplated that at least a portion of the conditions and/or measured inputs used for interpreting signals by the VSM control unit 150 may be received from ECU 130 and/or TCU 140, in addition to or alternatively to the plurality of vehicle sensors. Furthermore, the VSM control unit 150 may include one or more processors or controllers. Such as an idle coast management (ICM) controller, motoring controller, etc.

The VSM control unit 150 and/or ECU 130 and TCU 140 includes stored data values, constants, and functions, as well as operating instructions stored on, for example, a computer readable medium. Any of the operations of example procedures described herein may be performed at least partially by the VSM control unit 150. In certain embodiments, the VSM control unit 150 includes one or more controllers structured to functionally execute the operations of the controller. Further details of certain example embodiments of controller operations are discussed below. Operations illustrated are understood to be example only, and operations may be combined or divided, and added or removed, as well as re-ordered in whole or part, unless stated explicitly to the contrary herein.

Certain operations described herein include operations to interpret or determine one or more parameters. Interpreting or determining, as utilized herein, includes receiving values by any method, including at least receiving values from a datalink or network communication, receiving an electronic signal (for example, a voltage, frequency, current, or pulse-width modulation (PWM) signal) indicative of the value, receiving a software parameter indicative of the value, reading the value from a memory location on a computer readable medium, receiving the value as a run-time parameter by any means known in the art, and/or by receiving a value by which the interpreted or determined parameter can be calculated, and/or by referencing a default value that is interpreted or determined to be the parameter value.

ECU 130, TCU 140, and VSM control unit 150 are example components of an integrated circuit-based electronic control system (ECS) which may be configured to control various operational aspects of vehicle 100 and powertrain 102 as described in further detail herein. An ECS according to the present disclosure may be implemented in a number of forms and may include a number of different elements and configurations of elements. In certain preferred forms an ECS may incorporate one or more microprocessor-based or microcontroller-based electronic control units sometimes referred to as electronic control modules. An ECS according to the present disclosure may be provided in forms having a single processing or computing component, or in forms comprising a plurality of operatively coupled processing or computing components; and may comprise digital circuitry, analog circuitry, or a hybrid combination of both of these types. The integrated circuitry of an ECS and/or any of its constituent processors/controllers or other components may include one or more signal conditioners, modulators, demodulators, arithmetic logic units (ALUs), central processing units (CPUs), limiters, oscillators, control clocks, amplifiers, signal conditioners, filters, format converters, communication ports, clamps, delay devices, memory devices, analog to digital (A/D) converters, digital to analog (D/A) converters, and/or different circuitry or functional components as would occur to those skilled in the art to provide and perform the communication and control aspects disclosed herein.

One example embodiment of VSM control unit 150 is configured to dynamically adjust the vehicle speed toward a target speed before the vehicle is on a downhill segment of a route. In the example embodiment, the vehicle speed may be dynamically adjusted toward the target speed prior to or upon reaching the downhill segment of the route. VSM control unit 150 can use look ahead data and vehicle parameters such as vehicle mass to determine or predict a terminal speed, a transmission gear (where applicable, *i.e.,* when a transmission is present in the vehicle), and a pre-downhill electric power system target state (where applicable, i.e., where an electric power system is present as part of the prime mover system of the vehicle) for the vehicle. Terminal speed, transmission gear (where applicable), and electric power system target state (where applicable) may be determined based on any one or more of the foregoing conditions (i) the terminal speed, transmission gear (where applicable), and electric power system target state (where applicable) of the vehicle result in the vehicle traverses the downhill route segment safely based on the road slope or grade in view of the vehicle's operating parameters, such as vehicle mass, rear axle ratio, rolling radius of the tires, and/or other parameters that impact the vehicle's ability to traverse the downhill route segment, (ii) the terminal speed, transmission gear (where applicable), and electric power system target state (where applicable) may be determined based on the condition that powertrain retarder has sufficient retarding power to compensate for road grade power after taking into account all losses, including aerodynamic, rolling friction, and powertrain losses, (iii) the terminal speed, transmission gear (where applicable), and electric power system target state (where applicable) determination may involve driver intervention or control of the vehicle or may not involve driver intervention or control of the vehicle. VSM control unit 150 may determine target speed, transmission gear (where applicable), and electric power system target state (where applicable) based on the following rules: (iv) target speed is smaller than both terminal speed and the speed limit (v) target gear is smaller than both terminal gear and the highest transmission gear (where applicable) allowed at the speed limit (vi) target speed and gear are the highest values among possible values which meet condition (iv), condition (v), and the conditions used to define terminal speed and transmission gear (where applicable) as in (i), (ii), and (iii). VSM control unit 150 may also be configured to dynamically adjust the vehicle speed while the vehicle is traveling along a downhill segment of a route in addition to dynamically adjusting the vehicle speed toward a target speed before the vehicle is on the downhill segment of a route. VSM control unit 150 is also configured to control the vehicle speed not to exceed a downhill vehicle speed target during the downhill segment.

Another example embodiment of VSM control unit 150 may be configured to dynamically adjust the vehicle speed to a roll-out target speed over a portion of the downhill route segment. In the example embodiment, VSM control unit 150 may control the vehicle speed to accelerate toward the roll-out target speed (if needed because current vehicle speed is below the roll-out target speed) when the vehicle reaches a portion of the downhill route segment. For example, VSM control unit 150 may use look ahead data to determine a roll-out target speed in response to a speed limit (for example, a first posted speed limit) of the portion of the downhill route segment and a speed limit (for example, a second posted speed limit) along a route segment that is forward or ahead of the portion of the downhill route segment.

It shall be appreciated that a given downhill route segment according to the present disclosure may be preceded by an uphill route segment leading to a local apex, a substantially flat or zero-grade route segment, and/or a downhill route segment of a differing grade than the given downhill route segment. Likewise, a downhill vehicle speed target according to the present disclosure may comprise a speed target of the vehicle associated with a downhill route segment preceded by any one or more of the foregoing types of preceding segments. A downhill vehicle speed target according to the present disclosure may comprise a speed target based at least in part on a posted speed limit, a temporary speed limit (*e.g.,* a construction zone speed limit or a speed limit based on driver intervention), road conditions-based speed limit (*e.g*., road curvature, icing conditions, wetness conditions, or other road conditions), a terminal speed (*i.e.,* physics-based terminal velocity) calculated or determined for the vehicle for a given set of downhill operating conditions (*e.g*., environmental parameters and conditions vehicle parameters and conditions, such as road slope or grade in view of the vehicle's operating parameters, such as vehicle mass, rear axle ratio, rolling radius of the tires, and/or other parameters that impact the vehicle's ability to traverse the downhill route segment), a speed limit based on operator instructions or preferences or fleet manager instructions or preferences, a speed of the vehicle at an end of or a predetermined point along a downhill route segment, and/or other criteria or considerations. Similarly, a pre-downhill vehicle target speed according the to present disclosure may comprise a target speed of the vehicle associated with any one or more of the foregoing types of segments preceding a downhill route segment.

It is contemplated the look ahead data used to determine the terminal speed may be include data collected using a number of techniques including, for example, terrain data, environmental conditions, road surface conditions, road curvatures, a proximity or position of other vehicles, a spacing or distance to one or more other vehicles, a speed of one or more other vehicles, route conditions, upcoming grade or road slope conditions, GPS data, mapping data, inputs from one or more other vehicles or a forward looking radar system, and/or one or more models of the vehicle 100 including estimated mass, aerodynamic drag, rear axle ratio, rolling radius of the tires, and other conditions associated with vehicle 100. Terrain data may be gathered from a grade sensor such as an inclinometer or computer model structured to determine or estimate grade information from a map or geographic information system (GIS) data set which may be provided on board a vehicle or received via transmission from a remote location or combinations of such techniques.

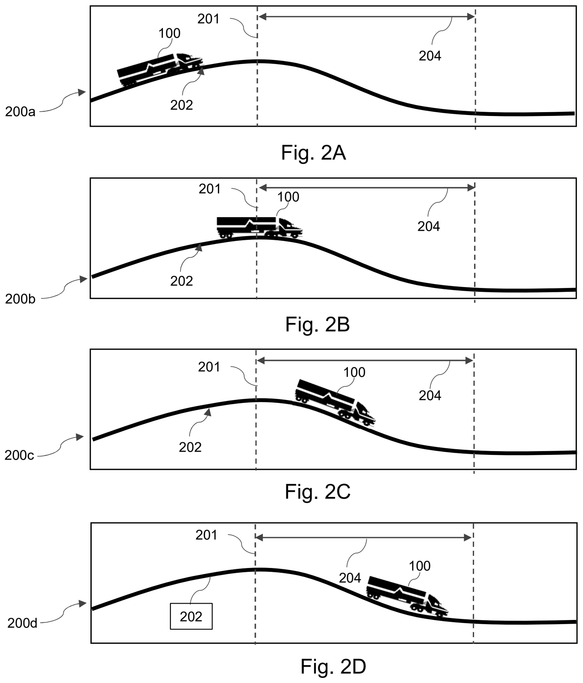

With reference to Figs. 2A-2D, there are illustrated diagrams 200a, 200b, 200c, and 200d depicting a vehicle 100 at a plurality of locations along a route 202 including a downhill segment 204. At the location illustrated in Fig. 2A, vehicle 100 is traveling along a segment of route 202 preceding downhill segment 204. At the illustrated location (or one or more additional or alternative locations prior to downhill segment) an electronic control system of vehicle 100 may obtain look ahead data including at least one of a future road grade and speed limit information for route 202. The look-ahead data may be obtained from one or more on-vehicle systems, one or more off-vehicle systems via a wireless communication link, or a combination thereof. In some embodiments, for example, the electronic control system of vehicle 100 may identify downhill segment in response to one or more GPS signals and on-board map information.

The electronic control system of vehicle 100 may utilize the look-ahead data or at least one of future road grade and speed limit information to determine if vehicle 100 is approaching a downhill route segment 204 and, in response, to determine a pre-downhill target speed, a pre-downhill target transmission gear (where applicable), a pre-downhill electric power system target state (where applicable), a downhill target speed, a downhill target transmission gear (where applicable), and a downhill electric power system target state (where applicable). The pre-downhill target speed pre-downhill target transmission gear (where applicable), pre-downhill electric power system target state (where applicable), downhill target speed, downhill target transmission gear (where applicable), and downhill electric power system target state (where applicable) may be determined according to an objective function optimization configured to minimize fuel consumption (or energy consumption, for example, in the case of an electric vehicle, a hybrid combustion-electric vehicle, or a fuel cell vehicle) subject to a vehicle speed limit constraint and potentially subject to one or more additional constraints such as, for example, a minimum vehicle speed, a maximum travel time, a target deceleration rate, or other constraints as will occur to one of skill in the art with the benefit and insight of the present disclosure. The vehicle speed limit constraint may be a posted or legal speed limit obtained from one or more on-vehicle systems, one or more off-vehicle systems via a wireless communication link, or a combination thereof. The vehicle speed limit constraint may be obtained from one or more cameras to detect posted, legal speed, or construction zone speed limit.

The electronic control system of vehicle 100 is further configured and operable to control the vehicle speed to achieve a pre-downhill target speed, control the vehicle transmission to a pre-downhill target transmission gear (where applicable), and control the electric power system to provide the pre-downhill electric power system target state (where applicable) prior to or upon reaching the beginning of downhill route segment 204. The pre-downhill target speed, pre-downhill target transmission gear (where applicable), pre-downhill electric power system target state (where applicable) may be utilized by vehicle 100 during a portion of or during substantially all of the downhill route segment 204 or may be varied according to one or more downhill speed targets and/or a one or more downhill target transmission gears (where applicable). The pre-downhill target speed, pre-downhill target transmission gear (where applicable), and pre-downhill electric power system target state (where applicable) may be selected to provide an initial vehicle speed less than that the downhill vehicle speed target, a transmission gear (where applicable) predicted to allow vehicle 100 to accelerate up to the downhill vehicle speed target at predetermined location along the downhill route segment, and a power absorption capacity of the electric power system (where applicable) predicted to allow use or regenerative braking or other electric braking (e.g., discharge of power from an electric machine through a braking resistor or a mechanical braking load such as an engine equipped with an engine brake) to maintain the target downhill vehicle speed. The fuel and/or energy consumption optimization may allow a vehicle to coast for some or all of the distance between the position of vehicle 100 depicted in FIG 2A and the position depicted in Fig. 2B and thereafter to accelerate along downhill route segment 204 up to the downhill vehicle speed target. The fuel and/or energy consumption optimization may allow a vehicle to replenish its energy storage system (where applicable) between the position depicted in FIG 2A and the position depicted in Fig. 2D or thereafter.

At the location illustrated in Fig. 2B, vehicle 100 has reached an apex 201 at the beginning of a downhill route segment 204. Upon or prior to reaching the apex 201, a speed of vehicle 100 has preferably been controlled to achieve the vehicle speed to a pre-downhill target speed, the transmission has preferably been controlled to engage the pre-downhill target transmission gear (where applicable), and the electric power system has preferably been controlled to provide the pre-downhill electric power system target state (where applicable). Vehicle 100 may begin descent along downhill route segment 204 at least initially traveling at or about the pre-downhill target speed in the pre-downhill target transmission gear (where applicable) at or about the pre-downhill electric power system target state.

At the location illustrated in Fig. 2C, vehicle 100 is traveling at a point along downhill route segment 204. The electronic control system of vehicle 100 is configured and operable to maintain or reduce the speed of vehicle 100 at or below the downhill vehicle speed target. As vehicle 100 proceeds along downhill route segment 204, the electronic control system of vehicle 100 may control one or more components of the powertrain to at least one of reduce the speed of the vehicle and maintain speed of the vehicle to comply with the downhill vehicle speed target. The electronic control system may, for example, engage and operate one or more of a powertrain retarder, a transmission gear downshifting (where applicable), and vehicle foundation brakes in maintain or reduce the speed of vehicle 100 at or below the downhill vehicle speed target. It shall be appreciated that a powertrain retarder according to the present disclosure may comprise, for example, an engine brake such a compression release brake or an exhaust brake, a hydraulic driveline retarder, powertrain/vehicle accessories, and electromagnetic driveline retarder, an electric machine-based electric brake (such as operation of an electric machine, power electronics, and an energy storage system in a regenerative braking mode, operation of an electric machine and a braking resistor to dissipate power, or operation of an electric machine and a mechanical load such as an engine operating in engine braking mode and coupled with the electric machine), or other powertrain retarders as will occur to one of skill in the art with the benefit and insight of the present disclosure.

At one or more points during the downhill route segment, the electronic control system may control operation of a powertrain retarder to contribute to at least one of the reducing speed of the vehicle and the maintaining speed of the vehicle without applying the foundation brakes. Operation of the regenerative braking may be prioritized as a first order operation utilized to maintain or reduce vehicle speed along downhill route segment 204.

At one or more points during the downhill route segment, the electronic control system may control operation of a powertrain retarder to contribute to at least one of the reducing speed of the vehicle and the maintaining speed of the vehicle without applying the foundation brakes. Operation of other electric braking (e.g., through a braking resistor) may be prioritized as a second order operation utilized to maintain or reduce vehicle speed along downhill route segment 204. Alternatively, other electric braking may be prioritized as a first order operation utilized to maintain or reduce vehicle speed along downhill route segment 204.

At one or more points during the downhill route segment, the electronic control system may control operation of a powertrain retarder to contribute to at least one of the reducing speed of the vehicle and the maintaining speed of the vehicle without applying the foundation brakes. Operation of the engine brake may be prioritized as a third order operation utilized to maintain or reduce vehicle speed along downhill route segment 204. Alternatively, engine brake may be prioritized as a first or second order operation utilized to maintain or reduce vehicle speed along downhill route segment 204.

In embodiments including a transmission, at one or more points during the downhill route segment, the electronic control system may during the downhill route segment, downshift the transmission to a lower gear to contribute to at least one of the reducing speed of the vehicle and the maintaining speed of the vehicle. Transmission downshift may be prioritized as a fourth order operation (after or subordinate to operation of the engine brake) utilized to maintain or reduce vehicle speed along downhill route segment 204. Alternatively, transmission downshift may be prioritized as a first, second, or third order operation (before or superordinate to operation of the engine brake) utilized to maintain or reduce vehicle speed along downhill route segment 204.

In embodiments including a transmission, at one or more points during the downhill route segment, the electronic control system may, during the downhill route segment and during downshifting of the transmission, operate the foundation brakes to contribute to at least one of the reducing speed of the vehicle and the maintaining speed of the vehicle. Operation of the foundation brakes may be performed in combination with a transmission downshift to maintain or reduce vehicle speed along downhill route segment 204. For example, operation of the foundation brakes may be performed while a transmission clutch is open and at least one of a prime mover is decoupled from the road wheels and the transmission is decoupled from the road wheels. Such operation may comprise brake snubbing of otherwise uncontrolled or minimally controlled downhill acceleration that may occur when the road wheels are decoupled from the prime mover and/or transmission. Operation of the foundation brakes may be prioritized as a fifth order operation (after or subordinate to a transmission downshift) utilized to maintain or reduce vehicle speed along downhill route segment 204 or, alternatively, may be given a higher priority.

In some embodiment, the order of priority among the operations, regenerative braking, other electric braking, engine braking, transmission shifting, and foundation braking can follow varieties of orders or be dynamically adjusted based on real-world scenarios.

The present disclosure contemplates a number of brake snubbing operations which can be utilized in reducing vehicle speed to a pre-downhill vehicle speed target and/or in reducing or maintaining speed of the vehicle at or below a downhill vehicle speed target. Some example brake snubbing operations comprise operating foundation brakes to reduce vehicle speed until the vehicle is capable of downshifting. Some example brake snubbing operations comprise operating foundation brakes during transmission gear shifting (where applicable) to limit or prevent positive vehicle/engine acceleration or provide negative vehicle/engine acceleration. Some example brake snubbing operations comprise operating foundation brakes and thereafter monitoring vehicle/engine speed to determine whether to perform additional operation of the foundation brakes. Some example brake snubbing operations comprise modulating retarding power in response to local variation in road grade. Some example brake snubbing operations comprise operating foundation brakes to avoid or mitigate gear downshifting events. Some example brake snubbing operations comprise prior to a downhill route segment, first controlling one or more components of the powertrain to provide at least one of reducing speed of the vehicle and maintaining speed of the vehicle to without applying the foundation brakes and, in response to a determination that the first control is not effective to achieve the pre-downhill target vehicle speed, operate the foundation brakes to one of reduce speed of the vehicle and maintain speed of the vehicle.

When approaching or during approaching maximum powertrain retarding ability, brake snubbing may be utilized. Brake snubbing could be with gear shift. Brake snubbing could be performed to reduce vehicle speed below target while continuing to apply a powertrain retarder. This can be used as to test whether temporary road grade variation exists such that vehicle speed can be maintained without preforming a full gear shift.

The present disclosure contemplates a number of electric machine operations which can be utilized in reducing vehicle speed to a pre-downhill vehicle speed target and/or in reducing or maintaining speed of the vehicle at or below a downhill vehicle speed target. Some example electric machine operations comprise driving a vehicle using an electric power system of a prime mover system to drive the vehicle in whole or in part to increase capacity of the electric power system to absorb power via electric braking. Some example electric machine operations comprise operating an electric power system of a prime mover system to perform regenerative braking or other electric braking (e.g., discharge of power from an electric machine through a braking resistor or a mechanical braking load such as an engine equipped with an engine brake) to maintain the target downhill vehicle speed.

At the location illustrated in Fig. 2D, vehicle 100 is traveling at a point along downhill route segment 204 approaching the end of downhill route segment 204. The electronic control system of vehicle 100 may utilize look-ahead data to determine if vehicle 100 is approaching the end of the downhill route segment 204 and, in response to such a determination, control the vehicle 100 to perform a hill roll-out (HRO) operation to acceleration vehicle 100 over a portion of the downhill route segment 204. HRO operation may control the vehicle speed to accelerate toward a roll-out target speed when vehicle 100 reaches the portion of the downhill route segment 204. The electronic control system may be configured to determine a roll-out target speed for the vehicle over a portion of the downhill route segment and control the vehicle to allow acceleration in response to gravity toward the roll-out target speed when the vehicle reaches a predetermined position or portion of the downhill route segment. The electronic control system of vehicle 100 may determine a roll-out target speed in response to one of a first posted speed limit of the portion of the downhill route segment and a second posted speed limit of a forward segment forward of the portion of the downhill route segment.

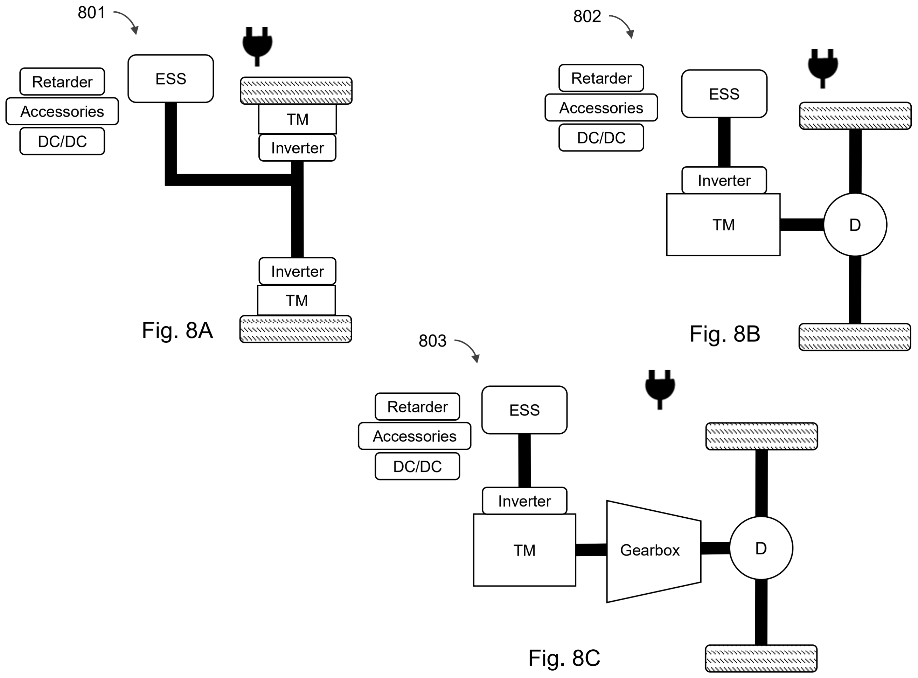

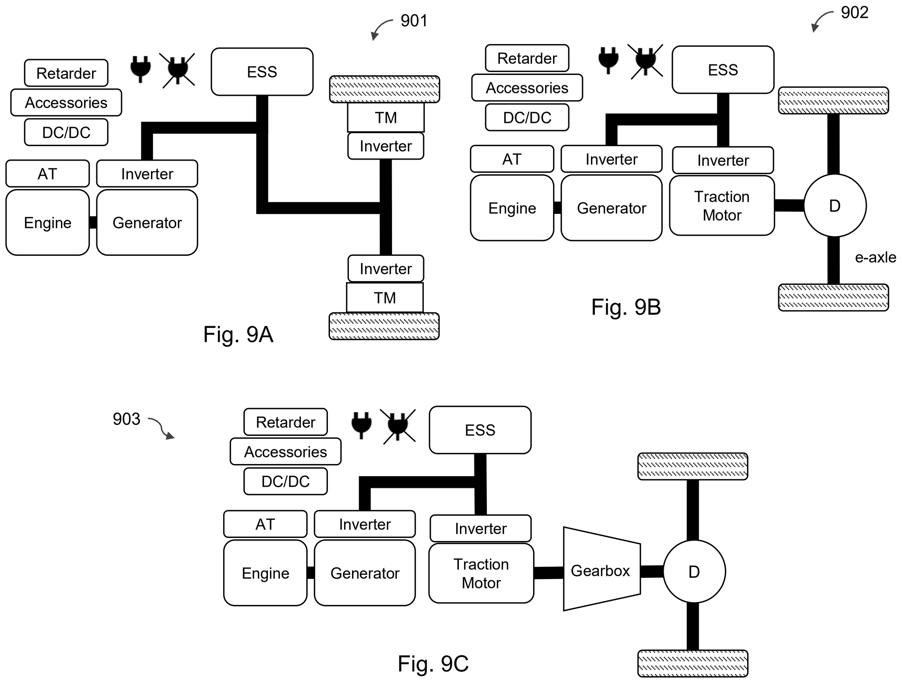

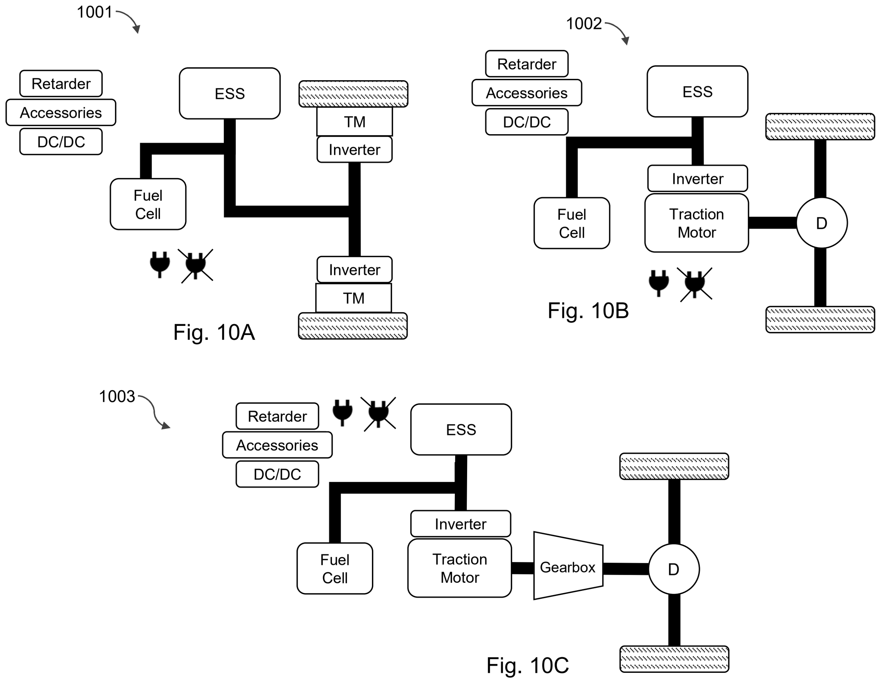

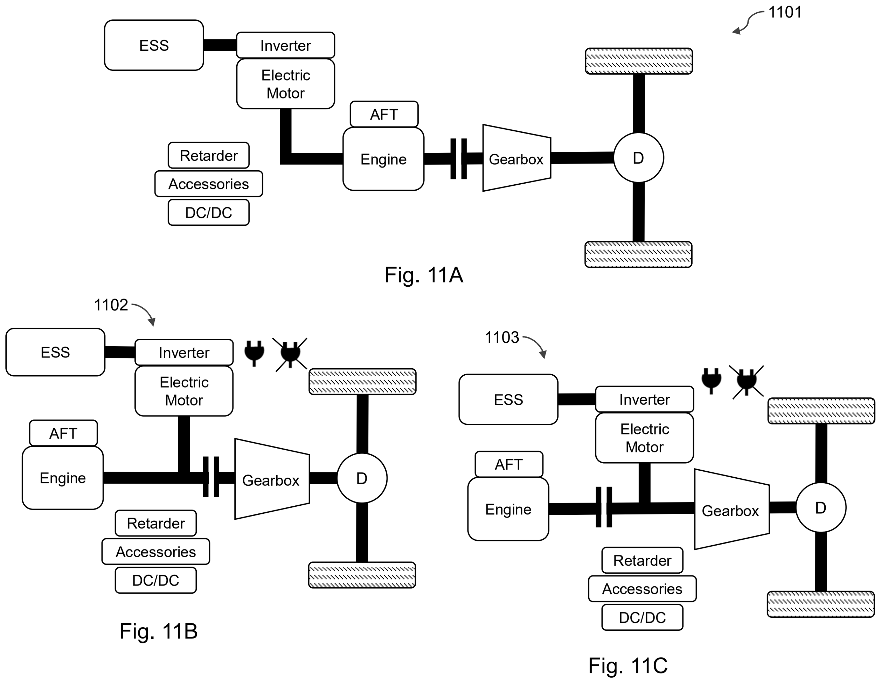

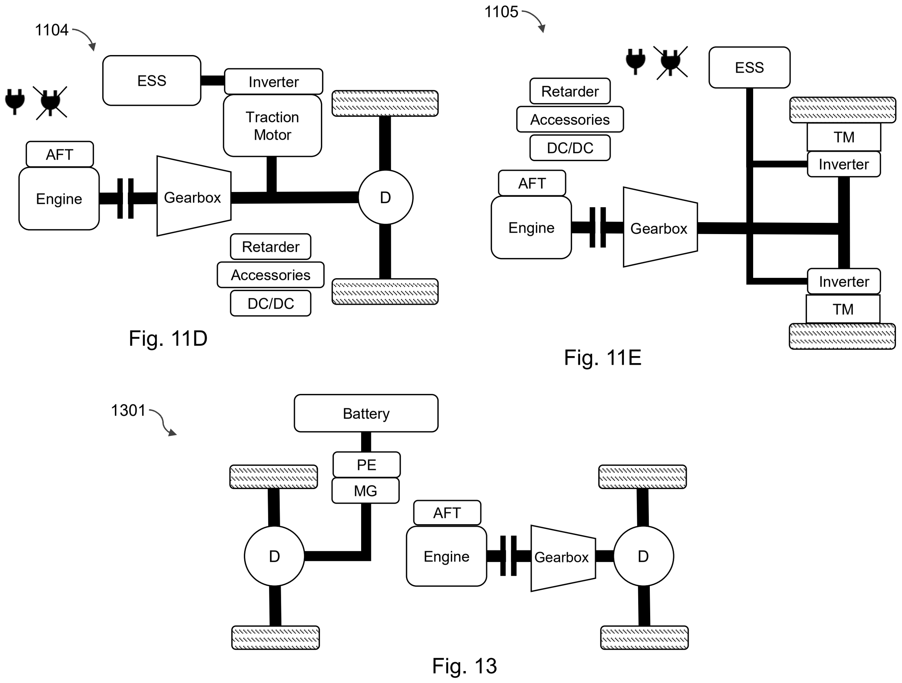

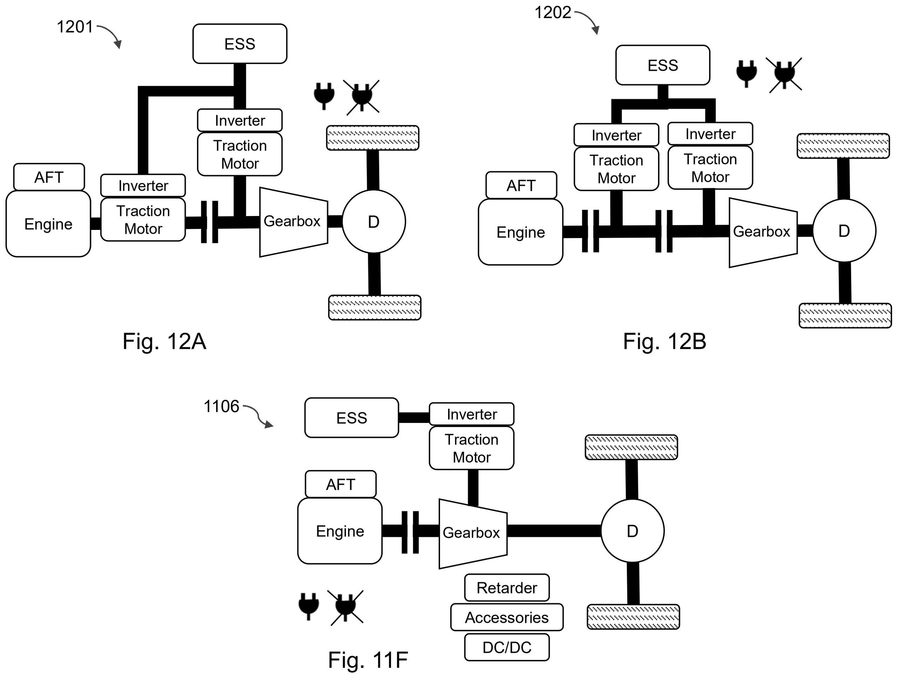

Embodiments comprising a prime mover system including an electric power system may utilized various techniques for performing HRO operations. For example, parallel hybrid powertrains *(e.g.,* powertrain 102 of Fig. 1, powertrain 1101 of Fig. 11A, powertrain 1102 of Fig. 11B, powertrain 1103 of Fig. 11C, powertrain 1104 of Fig. 11D, powertrain 1105 of Fig. 11E, or powertrain 1106 of Fig. 11F) may utilize regenerative braking or other electric braking in combination with engine motoring, neutral coast operation, or engine-off-coast operation, either instead of or in addition to engine braking. Series hybrid powertrains (e.g., powertrain 901 of Fig. 9A, powertrain 902 of Fig. 9B, or powertrain 903 of Fig. 9C) or series-parallel powertrains (e.g., powertrain 1201 of Fig. 12A or powertrain 1202 of Fig. 12B) may include a clutch between an engine and a generator and may be operable to perform coasting with the clutch open. In some operating scenarios, such systems may perform electric braking with the open clutch. Series hybrid powertrains (e.g., powertrain 901 of Fig. 9A, powertrain 902 of Fig. 9B, or powertrain 903 of Fig. 9C), battery electric vehicle (BEV) powertrains e.g., powertrain 801 of Fig. 8A, powertrain 802 of Fig. 8B, or powertrain 803 of Fig. 8C), and fuel cell powertrains (e.g., powertrain 1001 of Fig. 10A, powertrain 1002 of Fig. 10B, or powertrain 1003 of Fig. 10C) may control an electric machine to decrease an amount of regenerative braking or other electric braking. Series-parallel powertrains (*e.g*., powertrain 1201 of Fig. 12A or powertrain 1202 of Fig. 12B) and through-road parallel powertrains (*e.g*., powertrain 1301 of Fig. 13) may utilize any of the aforementioned operations.

Figs. 2A-2D illustrate one example of a predictive dynamic speed control (PDSC) which may be implemented in and executed by an electronic control system of vehicle 100. The PDSC may comprise a number of additional and/or alternative aspects. In one aspect, the PDSC may limit the speed of vehicle 100 to posted speed limit over a substantially flat road segment. For example, if a vehicle route remains substantially flat but posted speed limit is decreased, the PDSC may control vehicle speed to ramp down to a new posted speed limit in a similar way as the illustration for the case of downhill operation. The PDSC may operate in both cruise control and accelerator-based driving. In cruise control operation, the PDSC may reduce vehicle speed from a nominal isochronous cruise control speed to a safe hill descent speed. In accelerator-based operation, the PDSC may prevent a driver from accelerating back to the posted speed limit which is higher than the safe hill descent speed.

In a further aspect, when a vehicle approaches a lower posted speed limit and a driver does not take action to reduce vehicle speed, the PDSC may activate and apply a powertrain retarder and/or downshifts to reduce vehicle speed to the new posted speed limit. After reaching the new posted speed limit, the PDSC may inactive and return full controllability of vehicle to driver given that the vehicle is not on a downhill. In another embodiment, after reaching the new posted speed limit, PDSC may stay active and always enforces vehicle speed to posted speed limit.

In another aspect, when a vehicle approaches a downhill and driver does not take action but tries to increase vehicle speed to the posted speed limit, PDSC may apply electric braking, and/or activate and apply the engine brake and/or downshift to reduce vehicle speed and gear to desired values to enable a safe grade descent. Throughout the downhill, PDSC may remain activated effective to maintain vehicle speed at or below a downhill speed target.

In a further aspect, the PDSC may determine the moments it should start ramping down/downshifting and/or preparing electric power system state to stage vehicle before a downhill route segment as well as when to start hill roll-out (HRO) operation. The PDSC may determine one or more predicted speeds as are vectors corresponding to a predetermined look-ahead horizon (for example, a 5km look-ahead horizon). These vectors may be calculated at every time step and used to determine when to take action to meet vehicle speed requirements such as the pre-downhill vehicle target speed, pre-downhill target transmission gear (where applicable), pre-downhill electric power system target state (where applicable), downhill speed target, downhill target transmission gear (where applicable), downhill electric power system target state (where applicable), and/or roll-out target speed, roll-out target transmission gear (where applicable), and roll-out electric power system target state (where applicable).

In another aspect, the PDSC may, during the staging vehicle before downhill (for example, while the vehicle is on a substantially flat road segment) and vehicle already reached its target speed, the PDSC may perform a pseudo cruise control mode to automatically fuel the vehicle to maintain this target speed on flat road.

In a further aspect, the PDSC may perform a corrective mechanism during pre-downhill ramping down process. For example, if vehicle mass has been underestimated or overestimated, the PDSC may observe an error during a pre-downhill staging operation and command correction in the form of reduced or increased fueling, reduced or increased electric braking, reduced or increased engine braking, and/or more or less aggressive gear downshifting, and/or utilization of vehicle foundation brakes as the vehicle approaches an apex before a downhill route segment. In this manner, the PDSC may rely on the fact that prediction is more accurate over time as it approaches an apex before a downhill route segment, thus making the corrective actions effective.

In a further aspect, when a powertrain retarder is not capable of controlling downhill speed and downshift is not possible (for instance, because GPS is fully lost), PDSC engages the vehicle foundation brakes to reduce engine speed for being able to downshift. Other cases that foundation brakes can be utilized are when there are uncertainties in the input signals to PDSC, such as vehicle mass estimate, grade data. The PDSC may utilize a margin factor for engine retarding torque curve for robustness. If foundation brakes temperature is elevated, the margin factor can be higher to reduce the possibility that foundation brakes will need to be used. Higher margin can result in lowering target transmission gears (where applicable) and vehicle speeds during downhill. Different brake snubbing techniques may result in different brake temperature profiles. Therefore, calibrations for brake snubbing parameters can be obtained to allow the PDSC to achieve low brake temperature in connection with foundation brake operation requests. The PDSC may utilize foundation brakes as a torque filling device during transmission shifting to maintain vehicle speed on downhill.

In a further aspect, the PDSC may utilize a feedback mechanism which determines whether the vehicle is accelerating or over-speeding although a powertrain retarder is already utilized at its maximum capacity or whether the powertrain retarder is not being utilized at its predicted maximum capability. For example, in a scenario in which vehicle mass has been underestimated and actual road grade is greater than predicted road grade, the PDSC determines that a desired gear is gear 12, however, the actual desired gear should be 8. Under this scenario, the PDSC may maximize the utilization of powertrain retarder and apply the foundation brakes to slow down vehicle to the speed that transmission can be downshifted, and then execute the downshifts. The sequence may be repeated until the vehicle has reached a safe descent transmission gear (where applicable) and speed. The PDSC may make similar use of such a feedback mechanism when GPS data has been lost and a safe transmission gear (where applicable) has been similar incorrectly determined. In another example, when powertrain is not using its predicted retarding capability by comparing actual power and the predicted power, the PDSC can perform an upshift mechanism to get to a higher transmission gear (where applicable). A specific scenario this mechanism can be applied is when look-ahead data is lost and vehicle got back to flat road, the PDSC can identify to resume vehicle back to normal state.

In some scenarios a driver may reduce vehicle speed further from PDSC target speed, such as in construction zone where a predicted speed limit does not reflect an actual speed limit. The PDSC may supports a driver intervention mechanism sequence in which a driver depresses foundation brakes to reduce vehicle speed. After using foundation brakes, the driver may depress accelerator pedal to increase vehicle speed during which time the PDSC limits vehicle speed and responsiveness to accelerator pedal requests to a predetermined speed limit (such as one of the limits disclosed herein) and/or acceleration limit (such as an acceleration ramp limit). If the driver depresses the accelerator pedal in an attempt to exceed the PDSC target speed and/or target acceleration, PDSC may limit vehicle speed and/or acceleration to be within the limits.

In some scenarios a driver may intervene in PDSC operation with a manual gear request, for example, by manually downshifting a transmission gear (where applicable) below a gear initially selected by the PDSC. In such scenarios, the PDSC may choose a final transmission gear (where applicable) as the minimum value between PDSC gear request and driver gear request. Because the PDSC command speed is responsive to the final transmission gear (where applicable) request, if the final gear request is the driver's requested gear, PDSC command speed can be decreased further from the original PDSC command speed.

In some scenarios a driver may intervene in PDSC operation with a foundation brakes request, for example, a driver may depress the foundation brake pedal to a greater degree with desired greater vehicle deceleration than would otherwise be provided by the PDSC. In such scenarios, the driver's foundation brakes may prevail over the PDSC request. In another scenario the final foundation brakes request can be the sum total request of the braking requested by the PDSC and that requested by the driver.

In a further aspect, the PDSC may perform hill roll-out (HRO) actions by utilizing grade at the end of the downhill section to perform less electric braking to meet posted speed limit requirements, increase fuel economy, and/or improve drivability.

In a further aspect, the PDSC may perform hill roll-out (HRO) actions by utilizing grade at the end of the downhill section to perform either motoring, neutral coast, or engine-off coast to meet posted speed limit requirements, increase fuel economy, and/or improve drivability.

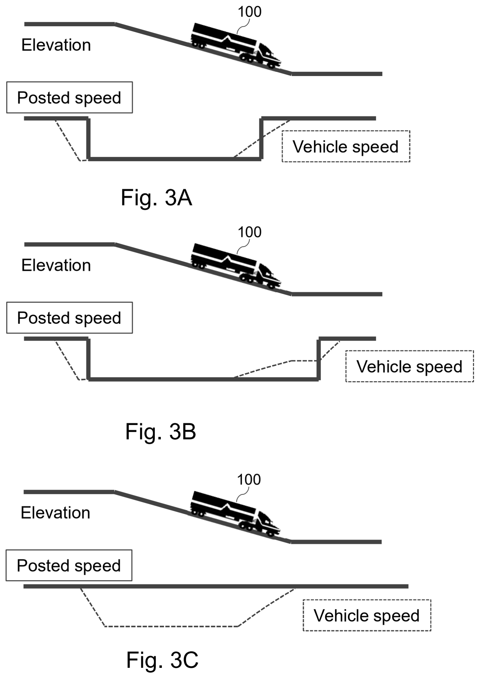

The PDSC may perform any types of HRO operations, depending on the topology of posted speed limit and grade illustrated in, but not limited to, Figs. 3A-3C . In a first example of HRO operation in Fig. 3A, a posted speed limit is increased before downhill route segment ends and the PDSC increases the downhill speed target to allow vehicle speed to ramp up to the increased posted speed limit while on the downhill route segment. The level of vehicle speed ramping before the increased posted speed limit may be determined by a pre-defined calibration in the amount of vehicle speed higher than the posted speed limit on downhill and/or meet the requirement that the distance of vehicle speed higher than the posted speed on downhill is smaller than a pre-defined calibration. The allowed amount of vehicle speed higher than the posted speed limit on downhill may be determined based on the posted speed limit on downhill and the increased posted speed limit.

In a second example of HRO operation in Fig. 3B, a posted speed limit increases at or after the end of a downhill route segment and the PDSC increases the downhill speed target to allow vehicle speed to ramp up to the increased posted speed limit while on the downhill route segment. At and after the end of the downhill segment, the PDSC limits vehicle speed to avoid vehicle speed exceeding the allowed level of vehicle speed ramping before the increased posted speed limit independent of driver acceleration action. The level of vehicle speed ramping before the increased posted speed limit may be determined by a pre-defined calibration in the amount of vehicle speed higher than the posted speed limit on downhill and/or meet the requirement that the distance of vehicle speed higher than the posted speed on downhill is smaller than a pre-defined calibration. The allowed amount of vehicle speed higher than the posted speed limit on downhill may be determined based on the posted speed limit on downhill and the increased posted speed limit.

In a third example of HRO operation in Fig. 3C, a posted speed limit is not changed during pre-downhill, on downhill, and post-downhill and the PDSC increases vehicle speed from target downhill speed back to posted speed. In some operating scenarios, HRO operation may be disabled due to a low confidence prediction of resulting vehicle speed. In some operating scenarios if vehicle speed is higher than the target during HRO, HRO operation may be switched to powertrain retarder operation with holding or downshifting transmission gear (where applicable) for some duration near the end of a downhill route segment.

For applications where there is more than one retarding device, the retarding power capability used by the PDSC may be the combined power capability of all retarding devices. This combined power capability is used to determine target speed and target gear as well as the moment to start ramping down/downshift pre-downhill. If a retarding device is powertrain retarder, its corresponding power curve takes into the impact of coolant and oil temperatures. These temperatures can also come from a predicted model based on look-ahead data. Retarding devices can include but not limited to any devices that provide retarding powers, electric motor, compression release brake, wastegate, VGT, exhaust throttle, intake air throttle, all types of powertrain retarders (hydraulic, electromagnetic, etc.), engine/vehicle accessories (compressors, fans) or any parasitic loads, aerodynamic enhancers/reducers such as air shield and automatic chassis lowering system, multi-axle (to increase rolling friction and axle losses).

In such applications, the PDSC may perform reactive and proactive actions. In a reactive action, when coolant temperature of powertrain retarder is high, its braking capability is reduced. This derated performance of powertrain retarder is taken into account and can result in a reduction in calculated target speed and target gear. This control action continuously happens, including both pre-downhill and downhill. In a proactive action, if the controller predicts that powertrain retarder may result into a de-rated condition, its power curve used in the controller can be reduced further from the instantaneous its power capability to prevent powertrain retarder from getting into derate or to get to the right target gear and speed in a proactive way to account for an upcoming powertrain retarder derate.

If there are retarding devices with different braking torque/power delivery resolutions, the high-resolution retarding device is used to assist the low-resolution retarding device so that powertrain can deliver high resolution braking torque/power, thus achieving good vehicle speed control during downhill. For the retarding devices controlled by their own control modules, speed/torque/power requests such as J1939 TSC1 message can be used by an electronic control unit (ECU) operating the PDSC.

During torque-interrupt transmission shifting when prime mover braking power is lost. Any other retarding devices, such as powertrain retarder, or vehicle foundation brake can be utilized as a torque filling device to compensate for the loss of or decrease in prime mover retarding power during the transmission gear (where applicable) shift. Predictive information can be utilized so that powers of these retarding devices are reserved for using during the shifting.

In some operating scenarios the PDSC may be faced with a loss of losing look-ahead data. The loss of look-ahead data may be abrupt (for example, due to failure of a GPS or navigational system, or gradual due to vehicle movement (for example, the route between two points may not be mapped). In the event of an abrupt loss of look-ahead data, the PDSC may be configured to takes only predictive action based on the current look-ahead data (right before or preceding data loss). Past look-ahead data and decision (before data loss) may be excluded. This is a conservative approach an assumes that the past look-ahead data is insufficiently reliable to be relied upon. In some embodiment, the PDSC may utilize past look-ahead data (before data loss) to make control decisions. In event of a gradual loss of look-ahead data, the PDSC may utilize past look-ahead data (before data loss) to make control decisions.

In some operating scenarios the PDSC may be faced with a failure of a vehicle speed sensor (for example, a failure or loss of data from a transmission output shaft speed sensor). In such scenarios the PDSC may utilize engine speed and transmission gear (where applicable) number to determine corresponding vehicle speed for its usage. During shifting, this vehicle speed may be considered as a constant.

In some operating scenarios, if the PDSC is faced with a loss of look-ahead data, other sensors, such as camera, LIDAR, can be used to provide look-ahead grade and posted speed limit. In one embodiment, fusion of cloud-based look-ahead device e-Horizon, camera, LIDAR, road grade sensor can be utilized to improve accuracy of look-ahead data.

In another aspect, the PDSC may perform adaptation action to adjust its parameters, such as the margin factor for engine braking torque curve, based on actions that the PDSC performs in response to a feedback mechanism. The engine braking torque curve may consider the impact of altitude where engine braking capability is limited from nominal condition. A model of engine braking torque curve derate using ambient air pressure may be utilized by PDSC for its prediction algorithms. A model of ESS derate may be utilized by PDSC for its prediction algorithms. A model of electric motor derate may be utilized by PDSC for its prediction algorithms. A model of foundation brake derate may be utilized by PDSC for its prediction algorithms. A model of other powertrain retarders derate may be utilized by PDSC for its prediction algorithms.

In another aspect, the PDSC may utilize vehicle-to-X (V2X) communication to consider the impact of traffic, including surrounding vehicles, traffic light in additional to posted speed limit to determine an effective posted speed limit and use it as the input to the feature. In one embodiment, advisory speed can be considered as a part of effective posted speed limit determination. Other information such as weather (rain, snow, high wind) and road can be used to determine vehicle dynamics parameters as well as the effective posted speed limit, which considers the impact of these factors. In one embodiment, an icy or wet road condition can be used to optimize vehicle deceleration process to avoid events such as jack-knife, for example, if vehicle on the back losing look-ahead, a front vehicle can provide/supplement e-horizon information thanks to vehicle-to-vehicle (V2V) communication. While all the main computation of the feature can happen within ECU, some additional advanced heavy computation can be performed on the cloud and communicate the information to ECU.

In a further aspect, the PDSC determines its operating mode (for example, disabled, inactive, active, degraded, and fault modes) and PDSC communicates its mode, speed target, and transmission gear (where applicable) request to display on vehicle dash. An example of a degraded mode is when look-ahead data is not available and PDSC only uses its feedback mechanism to protect vehicle. A feedback mechanism may utilize different types of sensors or virtual sensors, such as engine speed, vehicle speed, engine torque, temperatures of electrified components, temperatures of foundation brakes, temperatures of other powertrain retarders, to take control action. In another example, the configuration matching between an ECU with PDSC and e-Horizon can be a digital affirmation process to ensure look-ahead parameter exists. If it does not exist, PDSC can set to fault or inactive mode to warn driver. In another aspect, the PDSC may automatically activate four-way flashers/hazard lights.

The Machine Mass Estimator (MME) and Vehicle Parameter Determination (VPD) features may be used for the prediction algorithm in PDSC. As used herein, VPD is the feature to determine all power losses of the vehicle, including rolling friction loss, aerodynamic loss, and powertrain loss. Different sensors can be used for improving these estimations, such as torque sensor, wind sensor, camera (for detecting road surface, thus rolling resistance modeling), pressure sensor in air bag estimate mass of vehicle sit on axle. Measurement from these sensors can be fused with current production sensors used for these features to improve the prediction algorithm in ECU.

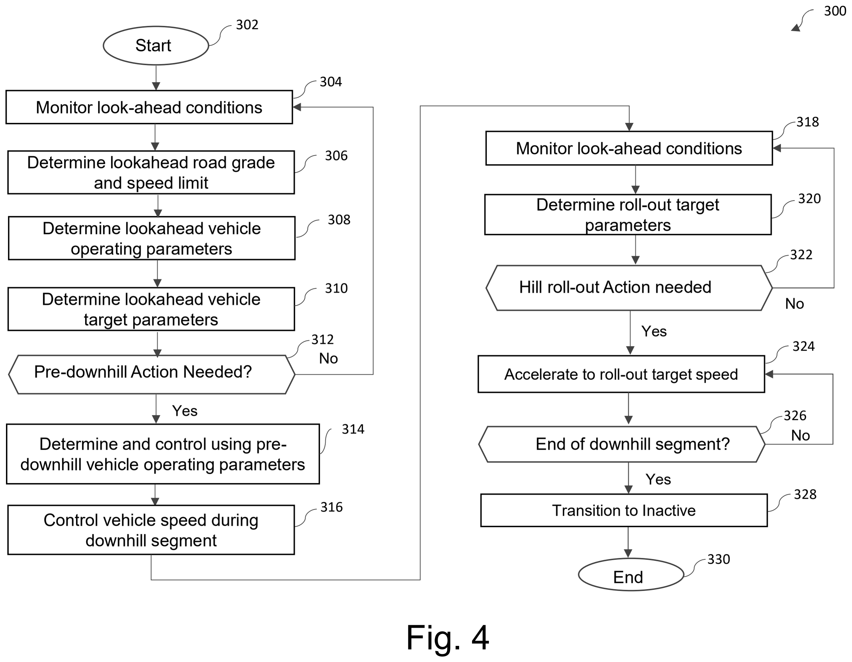

With reference to Fig. 4, there is illustrated a flow diagram of an example process 300 for dynamically adjusting a speed of vehicle 100 toward a target speed, shifting gear of transmission 106, and adjusting state of power system 117 *(e.g.,* electric machine 151, power electronics 153, and/or ESS 155) prior to or upon reaching a downhill segment of a route such as downhill route segment 204 in addition to dynamically adjusting the vehicle speed, the transmission gear (where applicable), and the power system state (where applicable) while the vehicle is traveling along downhill route segment 204.

Process 300 begins at operation 302, in which a control routine is started for controlling the vehicle speed, shifting transmission gear (where applicable), and controlling a state of power system 117 or its components (where applicable) before the downhill route segment 204 in response to a target speed for vehicle 100, target gear for transmission 106, and target state for power system 117 (*e.g.,* electric machine 151, power electronics 153, and/or ESS 155). The target speed may be determined based on lookahead road grade and speed limit along the downhill route segment 204, as discussed above.

Operation 302 may begin by interpreting a key-on event, completion of a cycle, a restarting process 300, by initiation of a vehicle operation such as a motoring condition, or by initiation by the vehicle operator or a technician. As used herein, a motoring condition is an operating condition in which the prime mover system 103 is not demanding fuel to propel the vehicle 100, such as when the throttle is closed, the accelerator pedal 145 is lifted, the accelerator pedal 145 resides in a deadband region not demanding fuel, and/or when the accelerator pedal 145 is not depressed.

Process 300 continues from operation 302 at operation 304. Operation 304 includes monitoring look ahead conditions along the route 202, such as approaching road grade, grade length, and vehicle speed limits, to name a few. It is contemplated that in certain embodiments, the look ahead conditions may include the road grade and speed limit for the entire route 202. In other embodiments, the look ahead conditions are for a portion of the route prior to the downhill route segment 204, the downhill route segment, and forward of the downhill route segment, all for which the vehicle speed is to be controlled using process 300.

Process 300 proceeds from operation 304 to operation 306 which determines lookahead road grade and speed limit parameters. Process 300 proceeds from operation 306 to operation 308 which includes determining lookahead vehicle operating parameters. Such lookahead vehicle operating parameters may comprise a predicted future vehicle speed (*e.g.,* a terminal vehicle speed), a predicted future transmission gear (*e.g.,* a terminal transmission gear), and a predicted future electric power system state (*e.g.,* a terminal electric power system state) such as a power storage level or power storage capacity and/or a temperature of one or more components of the electric power system (*e.g*., an electric machine, power electronics, or an energy storage system, among other components).

Process 300 proceeds from operation 308 to operation 310 which includes determining lookahead vehicle target parameters. Such lookahead vehicle target parameters may comprise a lookahead target speed, a lookahead target transmission gear (where applicable), and a lookahead target electric power system state such as a target power storage level or power storage capacity and/or a target temperature of one or more components of the electric power system (*e.g*., an electric machine, power electronics, or an energy storage system, among other components). Such lookahead vehicle target parameters may be determined in response to vehicle configuration, vehicle mass, road grade, and other conditions, as discussed above. Such lookahead vehicle target parameters may be continually updated during operation of vehicle 100, or periodically updated in response to the input of operating parameters into the ECS along the route.

Process 300 proceeds from operation 310 to conditional 312 which evaluates whether any pre-downhill action is needed while vehicle is approaching a downhill segment of the route 202. If conditional 312 evaluates NO, process 300 continues to operation 304 to continue monitoring look ahead conditions along the route 202. If conditional 312 evaluates YES, indicating an action is needed, process 300 continues from conditional 312 to operation 314.

Operation 314 determines pre-downhill vehicle operation parameters and controls operation of the vehicle using the pre-downhill vehicle operation parameters. The pre-downhill vehicle operation parameters may comprise a pre-downhill target vehicle speed, a pre-downhill target transmission gear (where applicable), and a pre-downhill target electric power system state (where applicable). The pre-downhill vehicle operation parameters may be selected prior to or upon the vehicle reaching the downhill segment. The pre-downhill vehicle operation parameters may be selected to contribute to maintaining desired downhill vehicle speed.

From operation 314, process 300 proceeds to operation 316 which controls the speed of vehicle 100 while it travels along downhill route segment 204. During operation 316, one or more components of the vehicle's powertrain may be controlled during the downhill route segment to reduce or maintain vehicle speed to comply with the downhill vehicle speed target. In some instances, operation of a powertrain retarder during the downhill route segment to reduce or maintain vehicle/engine speed without applying the foundation brakes may be controlled to comply with the downhill vehicle speed target. In some instances, the transmission may be downshifted to a lower gear during the downhill route segment to reduce or maintain vehicle/engine speed to comply with the downhill speed target. In some instances, the foundation brakes may be operated during the downhill route segment to reduce or maintain vehicle speed to comply with the downhill speed target and to control engine speed to comply with engine speed limits.

From operation 316, process 300 proceeds to operation 318 to continue monitoring look ahead conditions along the route 202. From operation 318, process 300 continues to operation 320 to determine target roll-out parameters. The target roll-out parameters may comprise a target roll-out speed, a target roll-out transmission gear (where applicable), and a target roll-out electric power system state (where applicable). The roll-out target speed may be determined in response to a first posted speed limit of the portion of the downhill route segment and a second posted speed limit along a route segment that is forward or ahead of the portion of the downhill route segment.

From operation 320, process 300 proceeds to conditional 322 to determine if the vehicle is approaching the end of the downhill segment of the route 202 and a Hill roll-out Action is needed. If conditional 322 is NO, process 300 continues to operation 318 to continue monitoring look ahead conditions along the route 202. If conditional 322 is YES, indicating the end of downhill segment of the route 202 is approaching and Hill roll-out Action can be performed, process 300 continues to operation 324.

Process 300 performs operation 324, where the vehicle is controlled to accelerate toward the roll-out target speed (if needed because current vehicle speed is below the roll-out target speed) when the vehicle reaches the portion of the downhill segment of the route 202. From operation 324, process 300 continues to conditional 326 to determine if end of downhill achieved. If conditional 326 is NO, process 300 continues to operation 324 to continue accelerating to roll-out target speed along the route 202. If conditional 326 is YES, indicating the end of downhill segment of the route 202 is achieved, process 300 continues to operation 328. Procedure performs operation 328 to transition to the PDSC to inactive. Process 300 is then complete and ends at operation 330, where process 300 may be restarted as discussed above with respect to operation 302.

The present disclosure provides an advanced look ahead control feature that electronically controls the vehicle as the vehicle traverses steep grades through selection of optimal powertrain decisions, specifically for engine, transmission, electric power system, foundation brakes, and other retarders, thereby ensuring safe and controlled grade descents.

Various aspects of the present disclosure are contemplated. According to one aspect, a vehicle system is provided that includes a powertrain including a prime mover and a transmission coupled to the prime mover, one or more powertrain retarders, one or more ground engaging wheels coupled to the transmission that are capable of being driven by the prime mover through the transmission, electric power system, foundation brakes that are actuatable to slow the one or more ground engaging wheels, and an electronic control system in operative communication with the prime mover, the transmission, the electric power system, and the foundation brakes.

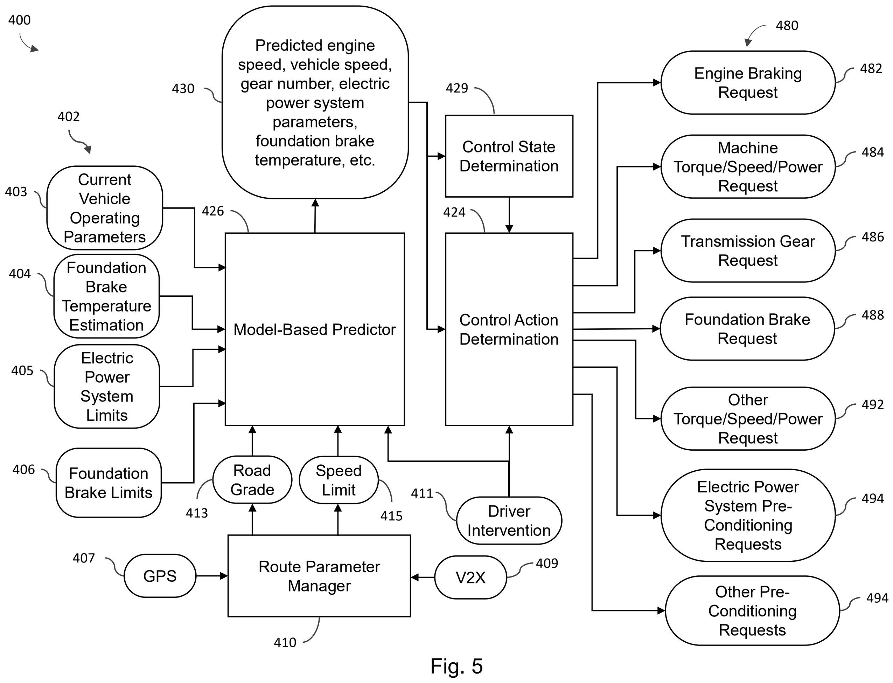

With reference to Fig. 5, there is illustrated a schematic diagram depicting certain aspects of an example controls 400 which may be implemented and provided in VSM control unit 150 and/or one or more other control units or other components of the ECS associated with of vehicle 100 and powertrain 102. Controls 400 are configured and operable to perform PDSC, HRO, and other powertrain and vehicle control operations of the present disclosure.

Controls 400 include route parameter manager 410 which is configured and operable to receive GPS information 407 and vehicle to X (V2X) information 409 and in response to one or both of these inputs determines and provides as output look-ahead road grade information 413 and look-ahead speed limit information 415.

Controls 400 include model-based predictor 426 which is configured and operable to receive inputs 402. In the illustrated example, model-based predictor 426 receives look-ahead road grade information 413 and look-ahead speed limit information 415. Model-based predictor 426 also receives current vehicle operating parameters 403, foundation brake temperature estimation 404, electric power system limits 405, and foundation brake limits 406. In response to the receive inputs, model-based predictor 426 determines predicted vehicle operation parameters 430 which may comprise a number of parameter, such as vehicle speed, engine speed, state of charge (SOC), state of health (SOH), gear number, states and/or temperatures of electrified components (ESS, electric machine, power electronics, etc.).

Current vehicle operating parameters 403 may include, for example, vehicle speed, road grade, vehicle mass, status of aerodynamic features of the vehicle, engine speed, engine torque and/or engine power, current transmission gear number, information about the status of one or more powertrain retarders, and/or other information about current operating parameters of the vehicle. Information about the status of one or more powertrain retarders may comprise, for example, engine brake status, hydraulic driveline retarder status, electromagnetic driveline retarder status, powertrain/vehicle accessory status, temperature of electric power system components (*e.g*., electric machine temperature, power electronics temperature, and/or ESS temperature), ESS state of charge parameters, ESS state of health parameters, electric machine operating mode parameters, wastegate position parameters, VGT position parameters, exhaust throttle position parameters, intake air throttle position parameters, and other information about the status of one or more powertrain retarders as will occur to one of skill in the art with the benefit and insight of the present disclosure.

Foundation brake temperature estimation 404, may comprise one or more estimates a current temperature of one or more service brake components. Electric power system limits 405 may comprise one or more temperature, speed, power, current, voltage, or other limits associated with one or more components of electric power system. Foundation brake limits 406 may comprise one or more limits on foundation brake temperature.

Predicted vehicle operation parameters 430 may are provided as input to control state determination logic 429 and control action determination logic 424. Control state determination logic 429 determines if action from controls 400 is required to provide a desired and/or safe grade descent. If action is required, control action determination logic 424 determines and output one or more requests or commands 480 for preparatory or responsive operation of a vehicle approaching or descending a downhill grate.

The requests or commands 480 for preparatory or responsive operation may comprise engine braking requests 482, machine torque/speed/power requests 484 (*e.g*., regenerative or other electric braking), transmission gear requests 486, foundation brake requests 488, and other torque/speed/power requests 492 (e.g., torque/speed/power requests of one or more other retarders, and engine, or other driveline components). The requests or commands 480 for preparatory or responsive operation may also comprise electric power system pre-conditioning requests 494 and other pre-conditioning requests 494 which may pre-condition one or more components of an electric power system to provide state-of-charge (SOC), temperature, vehicle speed, transmission gear number selection to allow for desired power absorption capacity.

The requests or commands 480 for preparatory or responsive operation may be provided to, processed by, and/or executed by one or more control units of an electronic control system such as those described herein. Driver intervention inputs 411 are also provided to model-based predictor 426 and control action determination logic 424 and may, modify or interrupt generation requests or commands 480 for preparatory or responsive operation.

Control action determination logic 424 may utilize an arbitration to determine which components have higher priority for being used for doing vehicle braking, including battery, engine, electric machine, accessories, other retarders, service brake. A battery or other ESS may be assigned highest priority. Foundation brakes may be assigned lowest priority due to the impact to service brake life. Power/torque curves of these components, other optimized metrics such as component life, thermal conditions, emissions, are all taken into account when making decision. In one embodiment, the order of priority is battery, accessories, other retarders, engine retarder, and lastly service brake.

Control action determination logic 424 may be configured and operable to command, increase, maximize operation of a thermal management system to cool battery or other ESS, an electric machine, power electronics, and/or other and electrified components more, which results in both higher capability of absorbing regenerative power and increase energy consumption due to the thermal management.

Control action determination logic 424 may be configured and operable may utilize a physics-based approach in determining required regen power, DDBC will choose regen power based on downhill condition (for protecting from overspeed) as well as environmental condition (for protecting wheel slip, drivability, etc.), especially for series powertrains in 6x4 configuration. This is applicable for all types of considered powertrains. Among them, powertrains in 6x4 configuration have additional control lever thanks to the power split capability between two axles. Powertrains in 6x4 configuration can split power among axles pre-downhill and downhill to optimize fuel and energy economy and maintain vehicle speed at or below a downhill speed target while protecting vehicle from wheel slip or drivability issue. In one embodiment, one axle is operated at power of the prime mover between continuous and peak powers and the other axle is operated at power of the prime mover between peak and continuous powers so that total power is achieved but the prime mover does not operate at peak power longer than the duration limit. In one embodiment, one axle is non-powered and the other axle is operated at power of the prime mover between peak and continuous. Alternatively, the two axles can operate at different levels of power split and at different levels of power from minimum power to peak power of the prime mover.

The target vehicle speed on a downhill may be calculated based on total retarder capability of the system which includes different powertrain components, e.g. traction motor, engine retarder, accessories. For example, for parallel hybrid powertrains, when both the engine retarder and the electric power system are available to participate in slowing the vehicle, the total braking power is at its maximum and will allow for a certain target speed. When the electric power system not available, a different target speed may be chosen. For series hybrid powertrain systems, when the battery has sufficient capacity to absorb regen energy, a certain target speed may be chosen. When the battery SOC is unable to absorb regen energy (SOC at max, too cold, etc.), either engine retarder through genset or brake resistors may be used but may not allow for the same level of vehicle braking effort, so a different target speed may be chosen.

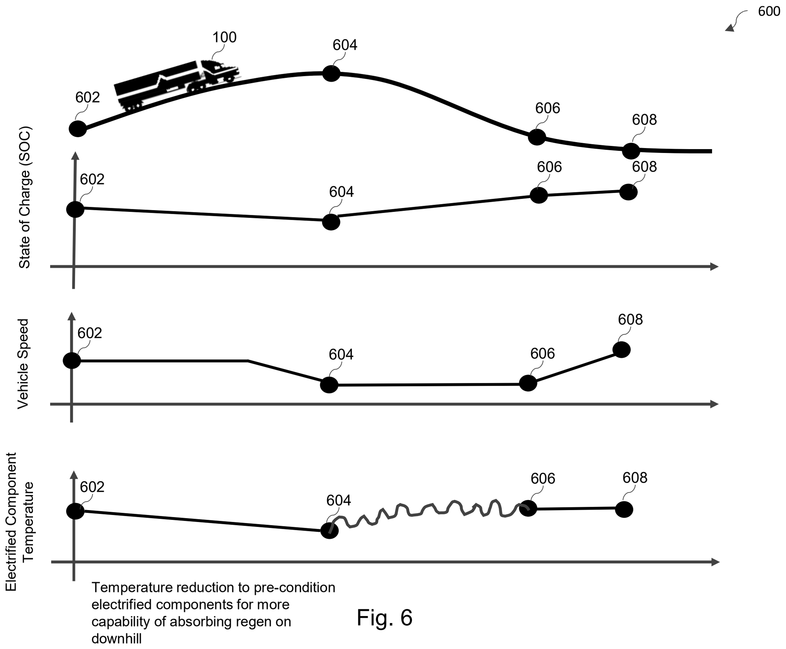

With reference to Fig. 6, there is illustrated a set of graphs 600 depicting example operations of vehicle 100 traveling along a route approaching and subsequently descending a downhill route segment. During the route segment between point 602 and point 604, the state of charge (SOC) of the energy storage system (ESS) is reduced to precondition a battery for regenerative braking during a downhill segment of the route. Additionally, vehicle speed is reduced to precondition a vehicle to have a slower speed of the beginning of the downhill at point 604. Furthermore, one or more electrified components is pre-cooled to reduce its temperature thereby preconditioning the electrified components to be capable of absorbing more power on the downhill route segment between point 604 and point 608. During the downhill between point 604 and point 606, vehicle speed is maintained constant by electric braking performed by the electrified components and other powertrain retarders, such as engine brake, and the temperature of the electrified components fluctuates. Between point 606 and point 608, vehicle speed is allowed to increase during a roll-out operation.

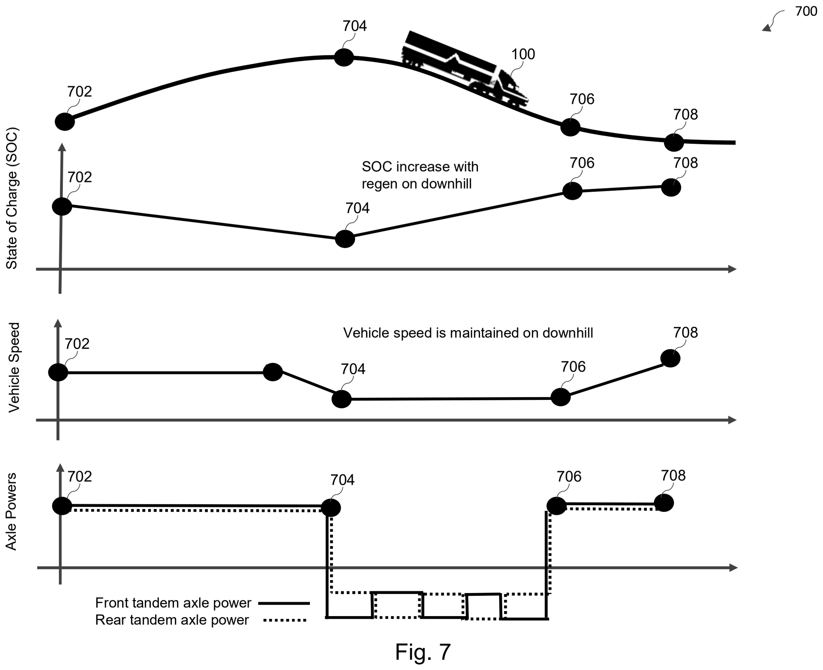

With reference to Fig. 7, there is illustrated a set of graphs 700 depicting example operations of vehicle 100 traveling between a plurality of points 702, 704, 706, 708 along a route and including a downhill route segment. Between point 704 and point 706, state of charge (SOC) of the energy storage system (ESS) increases due to regenerative braking performed on a downhill segment and vehicle speed is maintained as constant. The regenerative braking can be alternated between a front tandem e-axle and a rear tandem e-axle, by alternatively switching between continuous and peak power curves to maximize and maintain total braking power/performance while protecting components from de-rate and provide necessary peak regenerative power when there is short/intermediate request such as short duration downhill or need to decrease vehicle speed for further downshift.

This feature can predict the duration a component can stay in peak power as a part of whole look-ahead control. For example, based on look-ahead, the feature can decide to perform pre-cooling/maximize cooling effort of components, *e.g*., battery, motors before downhill to be able to increase to peak power on downhill. Pre-cooling components before downhill also helps to discharge SOC which allows more for regen energy when vehicle is on downhill. Switching power between continuous and peak power curves helps to maximize and maintain total braking power/performance while protecting components from de-rate provide necessary peak regenerative power when there is short/intermediate request such as short duration downhill or need to decrease vehicle speed for further downshift.

In electrified powertrains which have an engine mechanically connected to an electric machine via power electronics (e.g., series hybrid powertrains or series-parallel hybrid powertrains), one or more of DC bus voltage, traction motor operation, engine braking can be used to consume electrical braking energy by running in motoring mode or engine braking mode in addition to other regenerative components, such as battery, accessories, supercapacitor, other retarders. In some such embodiments a vehicle can be controlled to perform engine-off-coast, neutral coast to reduce friction loss on downhill if battery and electrified components are capable of absorbing all regen energy on downhill.

In electrified powertrains such as parallel hybrid, series-parallel hybrid powertrains, the vehicle can be controlled to can perform engine-off-coast, neutral coast to reduce friction loss on downhill if battery and electrified components are capable of absorbing all electrical braking energy on a given downhill route.

In electrified powertrains which have engine mechanically connected to traction, such as parallel or series-parallel powertrains, an electric machine, vehicle or powertrain accessories, supercapacitors, other retarders, and an engine retarder can be used for braking. An electric machine connected with battery may be utilized for regenerative braking and the engine can be operated in motoring or engine braking per need, such as when battery SOC is high and cannot absorb electrical braking energy.

For some parallel hybrid architectures (e.g., powertrain 1104 or powertrain 1105), and electric machine can be used as a torque filing device to traction on downhill during shifting.

For parallel hybrid architectures, during downhill operation, when engine brake is also needed in addition to regen braking, and electric machine can be used to enhance vehicle speed control performance thanks to the high resolution of torque delivery with electric motor.

For architectures having e-axle with multiple gears, the same strategies described for transmission can be applied for e-axle gears.

As illustrated by this detailed description, the present disclosure contemplates multiple embodiments including the following example embodiments.

Example embodiment 1 is a vehicle system, comprising: a powertrain including a prime mover system including an electric power system, the electric power system including an energy storage system (ESS), power electronics operatively coupled with the ESS, and an electric machine operatively coupled with the power electronics; one or more ground engaging wheels operatively coupled with the prime mover system; and an electronic control system in operative communication with the prime mover system, the electronic control system being configured to: determine, prior to reaching a downhill route segment, a pre-downhill target vehicle speed, a pre-downhill electric power system target state, and a downhill vehicle speed target, control the vehicle system to achieve the pre-downhill target vehicle speed and the pre-downhill electric power system target state prior to or upon reaching the downhill route segment, and operate the electric power system to perform electric braking during the downhill route segment to control vehicle speed according to the downhill vehicle speed target.

Example embodiment 2 includes the features of example embodiment 1, wherein the ESS includes a battery system, the pre-downhill electric power system target state includes a target battery state-of-charge, and the electronic control system is configured to, prior to the downhill route segment, control the ESS to provide the target battery state-of-charge.

Example embodiment 3 includes the features of example embodiment 2, wherein the target battery state-of-charge is achieved by discharging the battery prior to the downhill route segment to increase the available battery energy storage capacity.

Example embodiment 4 includes the features of example embodiment 1, wherein the electric power system includes a thermal management system, the pre-downhill electric power system target state includes at least one target electric power system temperature, and the electronic control system is configured to, prior to the downhill route segment, control the thermal management system to provide the at least one target electric power system temperature.

Example embodiment 5 includes the features of example embodiment 4, wherein the target electric power system temperature is achieved by cooling one or more of the ESS, the power electronics, and the electric machine prior to the downhill route segment to increase energy storage capacity of the electric power system.

Example embodiment 6 includes the features of example embodiment 1, wherein the prime mover system includes an engine operatively coupled with the one or more ground engaging wheels by a clutch, and the electronic control system is configured to operate the electric power system to perform electric braking during the downhill route segment concurrently with a coasting operation wherein the clutch is opened to decouple the engine from the ground engaging wheels.

Example embodiment 7 includes the features of example embodiment 1, wherein the electronic control system being configured to operate the electric power system to perform electric braking during the downhill route segment to control vehicle speed according to the downhill vehicle speed target comprises transitioning operation of the electric machine between peak power operation and continuous power operation.

Example embodiment 8 includes the features of example embodiment 1, wherein the prime mover system comprises one of a series hybrid system and a series-parallel hybrid system, including an engine operatively coupled with the electric machine, and the electronic control system is configured not charge the ESS and operate the engine to impose a load on the electric machine to control vehicle speed according to the downhill vehicle speed target.

Example embodiment 9 includes the features of example embodiment 1, wherein the prime mover system comprises one of a parallel hybrid system, a through-the-road parallel hybrid system, and a series-parallel hybrid system, and the electronic control system is configured to not charge the ESS from the power electronics and operate the engine to impose a load on the one or more ground engaging wheels to control vehicle speed according to the downhill vehicle speed target.

Example embodiment 10 includes the features of example embodiment 1, wherein the electronic control system is configured to: determine a roll-out target speed for the vehicle system over a portion of the downhill route segment; and control the vehicle system to accelerate toward the roll-out target speed when the vehicle system reaches the portion of the downhill route segment by one of: performing one of an engine motoring operation, a neutral coast operation, and an engine-off-coast operation, and operating the electric machine to decrease an amount of electric braking.

Example embodiment 11 includes the features of example embodiment 1, wherein the prime mover system includes an engine, and the electronic control system is configured to operate the electric power system to perform electric braking during the downhill route segment concurrently with one of an engine motoring operation and an engine braking operation.

Example embodiment 12 includes the features of example embodiment 1, wherein the electronic control system is configured to one or more of: (a) operate the electric machine to provide torque during a transmission shift to mitigate power disruption of the shift event, (b) downshift one of a transmission gear and an e-axle gear prior to reaching a downhill route segment, and (c) upshift one of a transmission gear and an e-axle gear during a downhill route segment.

Example embodiment 13 includes the features of example embodiment 1, wherein the electronic control system is configured to drive the prime mover system to accelerate the vehicle system during downhill operation of the vehicle system in response to a driver acceleration demand.

Example embodiment 14 is a process for controlling operation of a vehicle system including a powertrain including a prime mover system including an electric power system, the electric power system including an energy storage system (ESS), power electronics operatively coupled with the ESS, and an electric machine operatively coupled with the power electronics, one or more ground engaging wheels operatively coupled with the prime mover system, and an electronic control system in operative communication with the prime mover system, the process comprising operating the electronic controls system to perform acts of: determining, prior to reaching a downhill route segment, a pre-downhill target vehicle speed, a pre-downhill electric power system target state, and a downhill vehicle speed target, controlling the vehicle system to achieve the pre-downhill target vehicle speed and the pre-downhill electric power system target state prior to or upon reaching the downhill route segment, and operating the electric power system to perform electric braking during the downhill route segment to control vehicle speed according to the downhill vehicle speed target.

Example embodiment 15 includes the features of example embodiment 14, wherein the ESS includes a battery and the pre-downhill electric power system target state includes a target battery state-of-charge, and comprising operating the electronic control system to, prior to the downhill route segment, control the ESS to provide the target battery state-of-charge.

Example embodiment 16 includes the features of example embodiment 15, comprising discharging the battery prior to the downhill route segment to achieve the target battery state-of-charge and increase the available battery system energy storage capacity.

Example embodiment 17 includes the features of example embodiment 14, wherein the electric power system includes a thermal management system and the pre-downhill electric power system target state includes a target electric power system temperature, comprising operating the electronic control system to, prior to the downhill route segment, control the thermal management system to provide the target electric power system temperature.

Example embodiment 18 includes the features of example embodiment 17, wherein cooling one or more of the ESS, the power electronics, and the electric machine to achieve the target electric power system temperature prior to the downhill route segment to increase energy storage capacity of the electric power system.

Example embodiment 19 includes the features of example embodiment 14, wherein the prime mover system includes an engine operatively coupled with the one or more ground engaging wheels by a clutch, comprising operating the electronic control system is configured to operate the electric power system to perform electric braking during the downhill route segment concurrently with a coasting operation wherein the clutch is opened to decouple the engine from the ground engaging wheels.

Example embodiment 20 includes the features of example embodiment 14, comprising transitioning operation of the electric machine back and forth between peak power operation and continuous power operation during electric braking during the downhill route segment to control vehicle speed according to the downhill vehicle speed target.

Example embodiment 21 includes the features of example embodiment 14, comprising operating the electronic control system to not charge the ESS from the power electronics and operate the engine to impose a load on the electric machine to control vehicle speed according to the downhill vehicle speed target.

Example embodiment 22 includes the features of example embodiment 14, comprising operating the electronic control system to not charge the ESS from the power electronics and operate the engine to impose a load on one or more ground engaging wheels to control vehicle speed according to the downhill vehicle speed target.

Example embodiment 23 includes the features of example embodiment 14, comprising operating the electronic control system to: determine a roll-out target speed for the vehicle system over a portion of the downhill route segment; and control the vehicle system to accelerate toward the roll-out target speed when the vehicle system reaches the portion of the downhill route segment by one of: performing one of an engine motoring operation, a neutral coast operation, and an engine-off-coast operation, and operating the electric machine to decrease an amount of electric braking.

Example embodiment 24 includes the features of example embodiment 14, wherein the prime mover system includes an engine, and comprising operating the electronic control system to operate the electric power system to perform electric braking during the downhill route segment concurrently with one of an engine motoring operation and an engine braking operation.

Example embodiment 25 includes the features of example embodiment 14, comprising one or more of: (a) operating the electric machine to provide torque during a transmission shift to mitigate power disruption of the shift event, (b) downshifting one of a transmission gear and an e-axle gear prior to reaching a downhill route segment, and (c) upshifting one of a transmission gear and an e-axle gear during a downhill route segment.

Example embodiment 26 includes the features of example embodiment 14, wherein the prime mover system comprises a series hybrid system including an engine operatively coupled with the electric machine, and comprising operating the electronic control system to drive the prime mover system to accelerate the vehicle system during downhill operation of the vehicle system in response to a driver acceleration demand.

While illustrative embodiments of the disclosure have been illustrated and described in detail in the drawings and foregoing description, the same is to be considered as illustrative and not restrictive in character, it being understood that only certain example embodiments have been shown and described and that all changes and modifications that come within the spirit of the claimed inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A process for controlling operation of a vehicle system including a powertrain including a prime mover system including an electric power system, the electric power system including an energy storage system (ESS), power electronics operatively coupled with the ESS, and an electric machine operatively coupled with the power electronics, one or more ground engaging wheels operatively coupled with the prime mover system, and an electronic control system in operative communication with the prime mover system, the process comprising operating the electronic controls system to perform acts of:
determining, prior to reaching a downhill route segment, a pre-downhill target vehicle speed, a pre-downhill electric power system target state, and a downhill vehicle speed target,
controlling the vehicle system to achieve the pre-downhill target vehicle speed and the pre-downhill electric power system target state prior to or upon reaching the downhill route segment, and
operating the electric power system to perform electric braking during the downhill route segment to control vehicle speed according to the downhill vehicle speed target.

2. The process of claim 1, wherein the ESS includes a battery and the pre-downhill electric power system target state includes a target battery state-of-charge, and comprising operating the electronic control system to, prior to the downhill route segment, control the ESS to provide the target battery state-of-charge.

3. The process of claim 2, comprising discharging the battery prior to the downhill route segment to achieve the target battery state-of-charge and increase an available battery system energy storage capacity.

4. The process of claim 1, wherein the electric power system includes a thermal management system and the pre-downhill electric power system target state includes a target electric power system temperature, comprising operating the electronic control system to, prior to the downhill route segment, control the thermal management system to provide the target electric power system temperature.

5. The process of claim 4, wherein cooling one or more of the ESS, the power electronics, and the electric machine to achieve the target electric power system temperature prior to the downhill route segment to increase energy storage capacity of the electric power system.

6. The process of claim 1, wherein the prime mover system includes an engine operatively coupled with the one or more ground engaging wheels by a clutch, comprising operating the electronic control system is configured to operate the electric power system to perform electric braking during the downhill route segment concurrently with a coasting operation wherein the clutch is opened to decouple the engine from the ground engaging wheels.

7. The process of claim 1, comprising transitioning operation of the electric machine back and forth between peak power operation and continuous power operation during electric braking during the downhill route segment to control vehicle speed according to the downhill vehicle speed target.

8. The process of claim 1, comprising operating the electronic control system to not charge the ESS from the power electronics and operate an engine to impose a load on the electric machine to control vehicle speed according to the downhill vehicle speed target.

9. The process of claim 1, comprising operating the electronic control system to not charge the ESS from the power electronics and operate an engine to impose a load on one or more ground engaging wheels to control vehicle speed according to the downhill vehicle speed target.

10. The process of claim 1, comprising operating the electronic control system to:
determine a roll-out target speed for the vehicle system over a portion of the downhill route segment; and
control the vehicle system to accelerate toward the roll-out target speed when the vehicle system reaches the portion of the downhill route segment by one of:
performing one of an engine motoring operation, a neutral coast operation, and an engine-off-coast operation, and
operating the electric machine to decrease an amount of electric braking.

11. The process of claim 1, wherein the prime mover system includes an engine, and comprising operating the electronic control system to operate the electric power system to perform electric braking during the downhill route segment concurrently with one of an engine motoring operation and an engine braking operation.

12. The process of claim 1, comprising one or more of: (a) operating the electric machine to provide torque during a transmission shift to mitigate power disruption of a shift event, (b) downshifting one of a transmission gear and an e-axle gear prior to reaching a downhill route segment, and (c) upshifting one of a transmission gear and an e-axle gear during a downhill route segment.

13. The process of claim 1, wherein the prime mover system comprises a series hybrid system including an engine operatively coupled with the electric machine, and comprising operating the electronic control system to drive the prime mover system to accelerate the vehicle system during downhill operation of the vehicle system in response to a driver acceleration demand.

14. A vehicle system, comprising:
a powertrain including a prime mover system including an electric power system, the electric power system including an energy storage system (ESS), power electronics operatively coupled with the ESS, and an electric machine operatively coupled with the power electronics;
one or more ground engaging wheels operatively coupled with the prime mover system; and
an electronic control system in operative communication with the prime mover system, the electronic control system being configured to:
carry out the method according to any preceding claim.
